# EUROPÄISCHE PATENTSCHRIFT

(11) **EP 1 123 859 B1**
(45) Veröffentlichungstag und Bekanntmachung des Hinweises auf die Patenterteilung: **20.08.2008**
(21) Anmeldenummer: 01102997.2
(22) Anmeldetag: 08.02.2001
(51) Int. Cl.: B62J 1/08

(54) **Sattelträger**
Saddle support post
Tige de selle

(30) Priorität: 08.02.2000 DE 20002185 U
(43) Veröffentlichungstag der Anmeldung: 16.08.2001
(73) Patentinhaber: Heinz Kettler GmbH & Co., 59469 Ense-Parsit (DE)
(72) Erfinder: Kettler, Heinz, 59469 Ense- Parsit (DE)
(74) Vertreter: Schmitz, Hans-Werner

(56) Entgegenhaltungen:
- FR-A- 1 072 930
- FR-A- 2 771 938
- US-A- 460 784
- US-A- 2 600 101
- US-A- 4 772 069
- US-A- 5 007 675

## Beschreibung

Die Erfindung bezieht sich auf einen Sattelträger, insbesondere für ein Fahrrad oder ein Trainingsgerät.

Sowohl bei Fahrrädern als auch bei Trainingsgeräten ist es erforderlich, die Höhe und die Position des Sattels einzustellen. Derartige Einstellungen sind sowohl dann erforderlich, wenn unterschiedliche Personen das Trainingsgerät beziehungsweise das Fahrrad benutzen oder wenn sich die Anforderungen an den Trainingszustand ändern.

Aus dem Stand der Technik ist es bekannt, an einem Sattelrohr ein Stützrohr zu lagern, um auf diese Weise eine Höheneinstellung vornehmen zu können. Durch eine entsprechende Neigung des Sattelrohres erfolgt bei Änderung der Höhe zugleich eine gewisse horizontale Verschiebung des Sattels. Weitere schnellverstellbare Einstellungen sind üblicherweise nicht gegeben. Bekannte Sattel haben lediglich die Möglichkeit, die Neigung des Sattels zu justieren beziehungsweise diesen in horizontaler Richtung zu dem Stützrohr zu verschieben. Diese letztgenannten Einstellmöglichkeiten erfordern jedoch die Zuhilfenahme von Werkzeug und eignen sich somit nur zur Grundeinstellung, nicht jedoch zur schnellen, kurzfristigen Verstellung.

Die FR-A-1 072 930 beschreibt einen Sattelträger gemäß dem Oberbegriff des Anspruchs 1 mit einen teleskopisch an einem Sattelrohr verschiebbaren Stützrohr, welches mittels einer Klemmschraube einstellbar ist. An dem Stützrohr ist einem Winkel ein Tragrohr befestigt, auf welchem ein Schlitten verschiebbar ist, der wiederum ein Ansatzrohr lagert, an welchem ein Sattel mittels einer Klemmeinrichtung lösbar befestigt ist. Die verschiedenen Einstellungen sind, bedingt durch die Klemmeinrichtungen, umständlich und zeitaufwendig betätigbar und nicht sehr betriebssicher.

Die US-A-5 007 675 beschreibt eine Konstruktion, bei welcher an einem Stützrohr gelenkig und einstellbar ein Tragrohr gelagert ist, welches in nicht-einstellbarer Weise einen Sattel trägt, der jedoch durch teleskopische Ausgestaltung längs des Tragrohrs in seiner Lage verstellbar ist.

Eine weitere Konstruktion zeigt die US-A-460 784. Dabei ist ein abgewinkeltes Stützrohr mittels einer separaten Halterung gelagert. Auf dem Stützrohr ist horizontal verschiebbar ein Lagerbock angeordnet, welcher den Sattel trägt, wobei die Neigung des Sattels durch Verstellung des Lagerbocks justierbar ist. Eine ähnliche Konstruktion zeigt auch die US-A-2 600 101 (D5).

Die FR-A-2 771 938 beschreibt eine Ausgestaltung, bei welcher der Sattel an einem Stützrohr mittels eines Verschiebemechanismus gelagert ist. Der Verschiebemechanismus ist in Form von Profilen ausgebildet.

Aus der US-A-4 772 069 ist eine Konstruktion bekannt, bei welcher ein stufenweise in einem Sattelrohr verschiebbar gelagertes Stützrohr vorgesehen ist, welches eine Platte trägt, auf welche ein Sattel aufgesetzt ist.

Der Erfindung liegt die Aufgabe zugrunde, einen Sattelträger der eingangs genannten Art zu schaffen, welcher bei einfachem Aufbau und einfacher, betriebssicherer Bedienbarkeit sowohl eine horizontale als auch eine vertikale Schnell-Einstellung in unterschiedlichsten Abstufungen ermöglicht.

Erfindungsgemäß wird die Aufgabe durch die Merkmale des Hauptanspruchs gelöst, die Unteransprüche zeigen weitere vorteilhafte Ausgestaltungen der Erfindung. Im Rahmen der Erfindung ist somit vorgesehen, dass bei einem Sattelträger mit einem teleskopisch in einem Sattelrohr verschiebbaren Stützrohr, welches mittels einer Fixiereinrichtung in einem Winkel zur Längsachse des Stützrohres höhenverstellbar ist, ein Tragrohr befestigt ist, wobei auf dem Tragrohr ein Schlitten, der einen Sattel lagert, längs verschieblich und lösbar fixierbar gelagert ist.

Der erfindungsgemäße Sattelträger zeichnet sich durch eine Reihe erheblicher Vorteile aus. Durch die Verwendung eines Tragrohres und eines Schlittens, die hinsichtlich ihrer Verstellmöglichkeit in einem Winkel zu dem Stützrohr angeordnet sind, ist es möglich, sowohl eine horizontale als auch eine vertikale Einstellung auf einer "schiefen Ebene" vorzunehmen. Die Höhenverstellbarkeit des Stützrohrs in dem Sattelrohr erlaubt eine weitere Höhenverstellbarkeit. In besonders günstiger Ausgestaltung der Erfindung ist vorgesehen, dass die Längsachse des Stützrohrs zur Vertikalen geneigt ist. Somit erfolgt bei einer Verschiebung des Stützrohres in dem Sattelrohr auch zugleich eine gewisse horizontale Verstellung der Lage des Sattels.

Somit ist es auf besonders einfache und schnelle Weise möglich, die Höhe des Sattels einzustellen und dessen Abstand von einem Haltegriff, einem Lenker oder Ähnlichem zu variieren. Insbesondere bei Trainingsgeräten ist diese Verstellbarkeit, die sehr einfach ist und auch von technisch ungeübten Personen vorgenommen werden kann, sehr vorteilhaft. Gleiches gilt bei einer Verwendung des erfindungsgemäßen Sattelträgers bei einem Fahrrad. So kann beispielsweise bei einem Mountainbike die Position des Sattels zwischen einer Stellung zum Bergauf-Fahren und einer Stellung zum Bergab-Fahren leicht und schnell variiert werden.

Besonders günstig ist es, dass das Tragrohr in einem Winkel größer Null zur Horizontalen angeordnet ist. Durch Wahl dieses Winkels lässt sich das Verhältnis von horizontaler und vertikaler Verschiebung des Sattels beeinflussen. Hierdurch ergeben sich für den Konstrukteur vielfältige Variationsmöglichkeiten.

Besonders vorteilhaft ist es, dass an dem Schlitten ein Ansatzrohr befestigt ist, an welchem der Sattel mittels einer Klemmeinrichtung lösbar befestigt ist. Das Ansatzrohr kann in üblicher Dimensionierung ausgebildet werden, sodass handelsübliche Sättel verwendet werden können. Die Klemmeinrichtung ist so ausgestaltet dass eine Verschwenkbarkeit um eine horizontale Achse vorgesehen ist. Somit kann der Sattel entsprechend gekippt oder geneigt werden, um ein bequemes Sitzen zu ermöglichen.

Die Verstellung des Stützrohres in dem Sattelrohr und/oder des Schlittens zu dem Tragrohr ist stufenweise. Hierzu können Rastungen oder Ähnliches vorgesehen sein. Diese bieten den zusätzlichen Vorteil einer formschlüssigen mechanischen Halterung. Hierdurch wird die Betriebssicherheit ganz erheblich erhöht.

Das Sattelrohr kann Teil eines Fahrradrahmens sein, es ist jedoch auch möglich, das Sattelrohr als Teil eines Trainingsgerätes beziehungsweise als dessen Rahmen auszubilden. Dies gilt insbesondere für Fahrradtrainer oder Ähnliches.

Im Folgenden wird die Erfindung anhand eines Ausführungsbeispiel in Verbindung mit der Zeichnung beschrieben. Dabei zeigt die Figur eine schematische Seitenansicht, teils im Schnitt, des erfindungsgemäßen Sattelträgers.

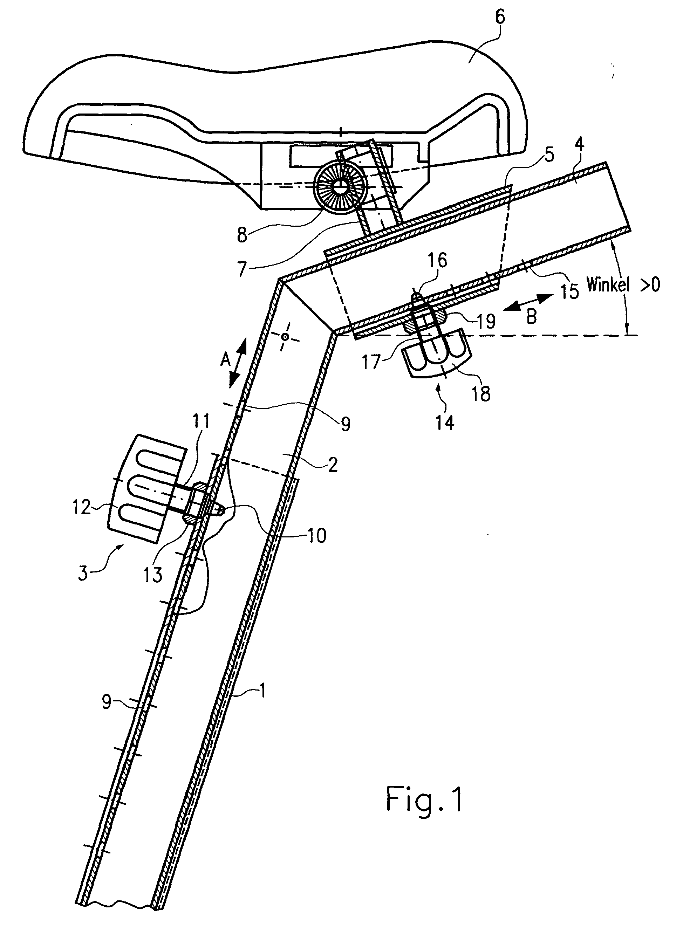

In Fig. 1 ist im Schnitt ein Teil eines Sattelrohres 1 dargestellt. Dieses ist nur schematisch abgebildet, es kann Teil eines Fahrradrahmens oder eines Trainingsgerätes sein.

In dem Sattelrohr 1 ist teleskopisch verschiebbar, wie durch den Doppelpfeil A angedeutet, ein Stützrohr 2 gelagert. Dieses ist mittels einer Fixiereinrichtung 3 in Stufen verstellbar. Hierzu weist das Stützrohr 2 mehrere Ausnehmungen 9 auf, in welche ein Stift 10 einführbar ist, der Teil einer Feststellschraube 11 ist, die einen Handknopf 12 aufweist und in einer an dem Sattelrohr 11 befestigten Mutter 13 verschraubbar ist.

Am oberen Ende des Stützrohres 2 ist ein Tragrohr 4 befestigt, dieses ist in einem Winkel zur Horizontalen ausgerichtet, wie sich aus der Fig. ergibt.

Auf dem Tragrohr 4 gleitet ein Schlitten 5, der mittels einer Fixiereinrichtung 14 stufenweise verstellbar ist. Die Fixiereinrichtung 14 ist analog der Fixiereinrichtung 3 ausgebildet. Sie umfasst einen Handknopf 18, der mit einer Feststellschraube 17 verbunden ist. Diese ist drehbar in einer Mutter 19 gelagert, welche fest mit dem Schlitten 5 verbunden ist. An dem vorderen Ende weist die Feststellschraube 17 einen Stift 16 auf, der wahlweise in eine von mehreren Ausnehmungen 15 des Tragrohres 4 einsetzbar ist.

An dem Schlitten 5 ist weiterhin ein Ansatzrohr 7 befestigt, welches in üblicher Dimensionierung ausgebildet ist und auf welches eine Klemmeinrichtung 8 aufsetzbar ist. Diese entspricht den aus dem Stand der Technik bekannten Klemmeinrichtungen und gestattet eine Neigung eines Sattels 6 um eine horizontale Achse.

Der Schlitten 5 ist relativ zu dem Tragrohr 4 verschiebbar, wie durch den Doppelpfeil B dargestellt.

Aus der Kombination der beiden möglichen Bewegungen, die durch die Doppelpfeile A und B gezeigt sind, ergibt sich, dass der Sattel 6 sowohl in horizontaler als auch in vertikaler Richtung in feinen Abstufungen verstellbar ist.

Es versteht sich, dass die Erfindung nicht auf die gezeigte Winkelanordnung des Tragrohres 4 beziehungsweise des Sattelrohres 1 beschränkt ist.

## Patentansprüche

1. Sattelträger mit einem teleskopisch in einem Sattelrohr (1) verschiebbaren Stützrohr (2), welches mittels einer Fixiereinrichtung (3) höhenverstellbar ist, wobei in einem Winkel zur Längsachse des Stützrohres (2) an diesem ein Tragrohr (4) befestigt ist, auf dem ein Schlitten (5) längsverschieblich und lösbar fixierbar gelagert ist, wobei der Schlitten (5) einen Sattel (6) lagert, wobei das Tragrohr (4) in einem Winkel > 0° zur Horizontalen angeordnet ist und die Längsachse des Stützrohres (2) zur Vertikalen geneigt ist, wobei an dem Schlitten (5) ein Ansatzrohr (7) befestigt ist, an welchem der Sattel (6) mittels einer Klemmeinrichtung (8) lösbar befestigt ist, **dadurch gekennzeichnet, dass** das Tragrohr (4) nach hinten ansteigend in einem Winkel zur Horizontalen geneigt und rückseitig von dem Stützrohr (2) abstehend an diesem gelagert ist, dass die Klemmeinrichtung (8) um eine horizontale Achse einstellbar schwenkbar ist, dass die Verstellung des Stützrohres (2) in dem Sattelrohr (1) nur stufenweise erfolgen kann und dass die Verstellung des Schlittens (5) zu dem Tragrohr (4) nur stufenweise erfolgen kann.

2. Sattelträger nach Anspruch 1, **dadurch gekennzeichnet, dass** das Sattelrohr (1) Teil eines Fahrradrahmens ist.

3. Sattelträger nach Anspruch 1, **dadurch gekennzeichnet, dass** das Sattelrohr (1) Teil eines Rahmens eines Trainingsgerätes ist.

## Claims

1. A saddle support post comprising a support tube (2) being telescopically displaceable in a saddle tube (1), the support tube being adjustable in height by means of fixing means (3), wherein a bracing tube (4) is attached thereto in an angle with respect to the longitudinal axis of the support tube (2), a carriage (5) being supported on the bracing tube in a manner being displaceable in a longitudinal direction and detachably attachable, wherein the carriage (5) supports a saddle (6), the bracing tube (4) being arranged in an angle > 0° with respect to the horizontal and the longitudinal axis of the support tube (2) being tilted with respect to the vertical, wherein a connecting tube (7) is attached at the carriage (5), the saddle (6) being detachable attached to the connecting tube by means of a clamping device (8), **characterized in that** the bracing tube (4) is tilted in an angle with respect to the horizontal, the angle rising toward the rear, and on the rear side is supported by the support tube (2) spaced therefrom, that the clamping device (8) is adjustably pivotal about a horizontal axis, that the adjustment of the support tube (2) in the saddle tube (1) may be performed only step-wise, and that the adjustment of the carriage (5) with respect to the bracing tube (4) may be performed only step-wise.

2. The saddle support post of claim 1, **characterized in that** the saddle tube (1) is part of a bicycle frame.

3. The saddle support post of claim 1, **characterized in that** the saddle tube (1) is part of a frame of an exercising device.

## Revendications

1. Support de selle avec un tube de support (2) mobile de manière télescopique dans un tube de selle (1), lequel est réglable en hauteur à l'aide d'un dispositif de fixation (3), un tube porteur (4) étant fixé sur le tube de support (2) selon un angle par rapport à l'axe longitudinal de celui-ci, sur lequel tube porteur un chariot (5) est monté de manière amovible et coulissante longitudinalement, le chariot (5) portant une selle (6), le tube porteur (4) étant disposé selon un angle > 0° par rapport à l'horizontale et l'axe longitudinal du tube de support (2) étant incliné par rapport à la verticale, un tube de raccord (7) étant fixé sur le chariot (5), sur lequel tube de raccord la selle (6) est fixée de manière amovible au moyen d'un dispositif de serrage (8), **caractérisé en ce que** le tube porteur (4) est incliné vers l'arrière en s'élevant selon un angle par rapport à l'horizontale et est monté à l'arrière sur le tube de support (2) en faisant saillie par rapport à celui-ci, **en ce que** le dispositif de serrage (8) peut pivoter de manière réglable autour d'un axe horizontal, **en ce que** le réglage du tube de support (2) dans le tube de selle (1) peut uniquement être effectué par paliers, et **en ce que** le réglage du chariot (5) par rapport au tube porteur (4) peut uniquement être effectué par paliers.

2. Support de selle selon la revendication 1, **caractérisé en ce que** le tube de selle (1) est une partie d'un cadre de bicyclette.

3. Support de selle selon la revendication 1, **caractérisé en ce que** le tube de selle (1) est une partie d'un cadre d'un appareil d'entraînement.
